# EUROPEAN PATENT SPECIFICATION

(11) **EP 2 897 995 B1**
(45) Date of publication and mention of the grant of the patent: **20.03.2019**
(21) Application number: 13838820.2
(22) Date of filing: 19.09.2013
(51) Int. Cl.: C08F 292/00, C08K 3/02, C08J 3/22, C01B 21/064, C08K 3/10, C08K 3/38, F16D 69/02

(54) **MASTERBATCH COMPRISING BORON NITRIDE, COMPOSITE POWDERS THEREOF, AND COMPOSITIONS AND ARTICLES COMPRISING SUCH MATERIALS**
MASTERBATCH MIT BORNITRID, KOMPOSITPULVER DARAUS SOWIE ZUSAMMENSETZUNGEN UND ARTIKEL MIT SOLCHEN MATERIALIEN
MÉLANGE MAÎTRE COMPRENANT DU NITRURE DE BORE, COMPOSITES PULVÉRULENTS DE CELUI-CI ET COMPOSITIONS ET ARTICLES COMPRENANT DE TELS MATÉRIAUX

(30) Priority: 19.09.2012 US 201261702790 P
(43) Date of publication of application: 29.07.2015
(73) Proprietor: Momentive Performance Materials Inc., Waterford, NY 12188 (US)
(72) Inventor: LEIST, Jon, North Olmsted, OH 44070 (US); LOEHL, Thomas, 44137 Dortmund (DE); GANGAL, Sanjay, Louisville, KY 40218 (US); DIORKA, Ronald, Goshen, KY 40026 (US); ZENG, Larry, Qiang, Strongsville, OH 44149 (US)
(74) Representative: Müller-Boré & Partner Patentanwälte PartG mbB
(86) International application number: PCT/US2013/060600
(87) International publication number: WO 2014/047274

(56) References cited:
- CN-A- 102 191 016
- CN-A- 102 250 583
- US-A- 5 576 358
- US-A- 5 984 055
- US-A- 5 984 055
- US-A- 6 062 351
- US-A1- 2010 063 192
- US-A1- 2010 063 192
- US-A1- 2010 196 691
- US-B2- 6 713 545
- GEWEN YI ET AL: "Mechanical and tribological properties of phenolic resin-based friction composites filled with several inorganic fillers", WEAR, vol. 262, no. 1-2, 4 January 2007 (2007-01-04), pages 121-129, XP055259957, CH ISSN: 0043-1648, DOI: 10.1016/j.wear.2006.04.004
- SHASHA LI ET AL: "Study on thermal conductive BN/novolac resin composites", THERMOCHIMICA ACTA, ELSEVIER SCIENCE PUBLISHERS, AMSTERDAM, NL, vol. 523, no. 1, 10 May 2011 (2011-05-10), pages 111-115, XP028258758, ISSN: 0040-6031, DOI: 10.1016/J.TCA.2011.05.010 [retrieved on 2011-05-17]

## Description

The present invention relates to a brake pad article comprising a composition formed from a base material and a masterbatch composition comprising a composite of a boron nitride material and a polymer resin material. The present invention also provides brake pad articles comprising boron nitride that are substantially free of copper.

Regulatory actions in the United States ("U.S.") have created the requirement that all new autos in the U.S. come equipped with brake pads essentially free of copper. The majority of automobiles in the U.S. employ resin-bonded friction formulations. Copper plays a vital role in the performance of a friction material. Namely, Copper is responsible for forming a protective film on the brake pad surface, which (a) results in higher friction and lower dust, (b) contributes to higher thermal conductivity that lowers the surface temperature and improves pad life, and (c) aids in mechanical integrity. As a result, alternative materials are necessary to perform the function of copper and allow its removal from resin-bonded friction formulations. US 2010/063192 A1 describes a polyarylene sulfide resin composition and a molded article formed therefrom. Gewen Yi et al. (Wear, Vol. 262, 2007, pp. 121-129) describes mechanical and tribological properties of phenolic resin-based friction composites filled with several inorganic fillers. Shasha Li et al. (Thermochimica Acta, Vol. 523, 2011, pp. 111-115) describes a study on thermal conductive BN/novolac resin composites. CN 102 250 583 A describes a low copper-containing friction material composition used as a brake pad. CN 102 191 016 A describes a copper-free friction material composition for brake pads. US 5 984 055 A describes an integrated fiber reinforced ceramic matrix composite brake pad and a back plate.

The present invention provides a brake pad article comprising a composition formed from a base material and a masterbatch composition comprising a composite of a boron nitride material and a polymer resin material. The masterbatch compositions can be used to provide a masterbatch boron nitride/resin composite material and powders or particles thereof. The masterbatch composite powders can be used in a variety of applications. In one embodiment, the masterbatch composite powders can be used as part of a friction formulation used in brake pads. The masterbatch composite powders impart the friction formulations with properties that are improved over friction composition formed by dry blending the boron nitride and resin material as separate components.

In one aspect the present invention provides, a brake pad article comprising a composition formed from a base material and a masterbatch composition comprising a composite of (a) a boron nitride material, and (b) a polymer resin material.

In one embodiment, the masterbatch composition comprises from 5 weight percent to 60 weight percent of boron nitride and from 40 weight percent to 95 weight percent of the polymer resin. In one embodiment, the masterbatch composition comprises from 20 weight percent to 50 weight percent of boron nitride and from 50 weight percent to 80 weight percent of the polymer resin. In one embodiment, the masterbatch composition comprises from 25 weight percent to 40 weight percent of boron nitride and from 60 weight percent to 75 weight percent of the polymer resin.

In one embodiment, the boron nitride is chosen from platelet boron nitride, hexagonal boron nitride, boron nitride nanotubes, boron nitride fibers, agglomerates of hexagonal boron nitride, or a combination of two or more thereof.

In one embodiment, the boron nitride comprises boron nitride particles or agglomerates having an average particle size of from 1 to 500 microns.

In one embodiment, the polymer resin material is chosen from a thermoset material or a thermoplastic material. In one embodiment, the polymer resin material comprises a phenol formaldehyde resin. In one embodiment, the polymer resin material is a novolac resin.

In one embodiment, the masterbatch composition comprises a functionalization agent chosen from a silane, a titanate, a zirconate, an aluminate, a hyperdispersant, a maleated oligomer, a fatty acid or wax and their derivatives, an ionic surfactant, a non-ionic surfactant, or a combination of two or more thereof.

The present invention provides a brake pad article comprising a composition formed from a base material and the masterbatch composition according to aspects and embodiments of the present invention. In one embodiment, the base material is a non-asbestos organic formulation, a low metallic resin bonded formulation, or a semi-metallic resin bonded formulation. In one embodiment, the composition is disposed on a surface of the brake pad article. In another embodiment, the brake pad article is formed from the composition.

The present invention provides a brake pad article comprising a composition comprising the masterbatch composition.

In one embodiment, the brake pad article comprises from 0.1 weight percent to 10 weight percent of boron nitride. In one embodiment, the brake pad article comprises from 1 weight percent to 8 weight percent of boron nitride. In one embodiment, the brake pad article comprises from 2.5 weight percent to 7.5 weight percent. In one embodiment, the brake pad article comprises from 0.1 weight percent to 7.5 weight percent of copper.

In one embodiment, the brake pad article is free of copper.

In one embodiment, the brake pad article has a µ14 value after SAE J2522 test that is up to 35% greater than that of an article comprising a same concentration of boron nitride and/or copper formed from a dry blend. In one embodiment, the brake pad article has a µ14 value after SAE J2522 test that is 10% to 35% greater; 15% to 30%; even 20% to 25% than that of an article comprising a same concentration of boron nitride and/or copper formed from a dry blend.

In one embodiment, the brake pad article has a pad thickness loss after SAE J2522 test that is up to 65% lower than that of an article comprising a same concentration of boron nitride and/or copper provided from a dry blend. In one embodiment, the brake pad article has pad thickness loss after SAE J2522 test that is 10% to 65% lower than that of an article comprising a same concentration of boron nitride and/or copper provided from a dry blend.

The present invention provides a brake pad article comprising a composition formed from a base material and a masterbatch comprising boron nitride and a polymer resin material. The masterbatch compositions can function as a lubricant and provide thermal conductivity to a composition. The masterbatch compositions can be used in a variety of applications.

The term "masterbatch" refers to a solid or liquid concentrated mixture of additives encapsulated into a carrier resin. The master batch is subsequently blended, using various techniques, with other materials to form a final article, wherein the concentration of the additives is diluted. The master batch approach provides a more convenient way of incorporating the additives into the final articles.

In the present invention, the masterbatch composition comprises a boron nitride material as an additive, dispersed in a polymer resin composition. The masterbatch composition is used to form a composite material that is a composite of the boron nitride and the resin material. The term "masterbatch" also includes such composites and powders, granules, or particles formed from such composites and which may also be referred to herein as "masterbatch composites," "masterbatch powders," or "masterbatch composites" or the like.

The form of the boron nitrides (boron nitride) used in the masterbatch composition is not particularly limited. Boron nitride is commercially available from a number of sources, including, but not limited to, Momentive Performance Materials, Sintec Keramik, Kawasaki Chemicals, St. Gobain Ceramics, etc.

The form of boron nitride used in the masterbatch composition is not limited and can be chosen from, for example, amorphous boron nitride (referred to herein as a-BN); boron nitride of the hexagonal system, having a laminated structure of hexagonal-shaped meshed layers (referred to herein as h-BN); or a turbostratic boron nitride, having randomly oriented layers (referred to herein as t-boron nitride); platelet boron nitride; boron nitride fibers; born nitride agglomerates; boron nitride nanotubes, etc., or combination of two or more thereof. In one embodiment, the boron nitride is in the platelet, turbostratic form, hexagonal form, or mixtures of two or more thereof.

The size of the boron nitride particles employed in forming the masterbatch can be selected as desired for a particular purpose or intended use. In one embodiment, the particle size can range from nanometers to micron size particles In one embodiment, the boron nitride powder has an average particle size of 1 µm to 500 µm; from 5 µm to 100 µm; even from 10 µm to 30 µm. In one embodiment, the boron nitride powder has an average particle size of at least 50 µm. In one embodiment, the boron nitride powder comprises irregularly shaped agglomerates of hBN platelets, having an average particle size of above 10 µm. Here, as elsewhere in the specification and claims, numerical values can be combined to form new and non-disclosed ranges.

In one embodiment, the boron nitride particles have a primary average particle size of less than 100 microns. In a second embodiment, less than 50 microns. In a third embodiment, in the range of 10 to 30 microns. In a fourth embodiment, having an average particle size of less than 20 microns. In yet another embodiment, the boron nitride powder particles have a primary average particle size of less than 250 microns.

In one embodiment, the boron nitride particles consist essentially of hBN platelets having an aspect ratio of from 10 to 300. In another embodiment, the boron nitride particles have an oxygen content from 0.2 to 2.5 wt. %. In another embodiment, the hBN particles have a graphitization index of less than 7.

The boron nitride component can comprise crystalline or partially crystalline boron nitride particles made by processes known in the art. These include spherical boron nitride particles in the micron size range produced in a process utilizing a plasma gas as disclosed in U.S. Pat. No. 6,652,822; hBN powder comprising spherical boron nitride agglomerates is formed from irregular non-spherical boron nitride particles bound together by a binder and subsequently spray-dried, as disclosed in US Patent Publication No. US2001/0021740; boron nitride powder produced from a pressing process as disclosed in U.S. Pat. Nos. 5,898,009 and 6,048,511; boron nitride agglomerated powder as disclosed in US Patent Publication No. 2005/0041373; boron nitride powder having high thermal diffusivity as disclosed in US Patent Publication No. US2004/0208812A1; and highly delaminated boron nitride powder as disclosed in U.S. Pat. No. 6,951,583. These also include boron nitride particles of the platelet morphology.

In another embodiment, the boron nitride powder is in the form of spherical agglomerates of hBN platelets. In one embodiment of spherical boron nitride powder, the agglomerates have an average agglomerate size distribution (ASD) or diameter from 10 µm to 500 µm. In another embodiment, the boron nitride powder is in the form of spherical agglomerates having an ASD in the range of 30 µm to 125 µm. In one embodiment, the ASD is 74 to 100 microns. In another embodiment, 10 µm to 40 µm. Here, as elsewhere in the specification and claims, numerical values can be combined to form new and non-disclosed ranges.

In one embodiment, the boron nitride powder is in the form of platelets having an average length along the b-axis of at least 1 micron, and typically between 1 µm and 20 µm, and a thickness of no more than 5 microns. In another embodiment, the powder is in the form of platelets having an average aspect ratio of from 50 to 300.

In one embodiment, the boron nitride is surface-treated ("coated") to further impart lubricating characteristics to the ingredient. Examples of surface coating materials for the boron nitride powder include, but are not limited to, isohexadecane, liquid paraffin, non-ionic surfactants, dimethylpolysiloxane (or dimethicone), a mixture of completely methylated, linear siloxane polymers which have been terminally blocked with trimethylsiloxy units, a silazane compound possessing perfluoroalkyl groups, a zirconate coupling agent, a zirconium aluminate coupling agent, an aluminate coupling agent, and mixtures thereof.

The polymer matrix material can include any polymer or resin material as desired for a particular purpose or intended application. In one embodiment, the resin material can be a thermoplastic material. In another embodiment, the resin material can be a thermoset material.

Examples of suitable resin materials include, but are not limited to, polycarbonate; acrylonitrile butadiene styrene (ABS) (C₈H₈C₄H₆C₃H₃N); polycarbonate/acrylonitrile butadiene styrene alloys (PC-ABS); polybutylene terephthalate (PBT); polyethylene therephthalate (PET); polyphenylene oxide (PPO); polyphenylene sulfide (PPS); polyphenylene ether; modified polyphenylene ether containing polystyrene; liquid crystal polymers; polystyrene; styrene-acrylonitrile copolymer; rubber-reinforced polystyrene; poly ether ketone (PEEK); acrylic resins such as polymers and copolymers of alkyl esters of acrylic and methacrylic acid styrene-methyl methacrylate copolymer; styrene-methyl methacrylate-butadiene copolymer; polymethyl methacrylate; methyl methacrylate-styrene copolymer; polyvinyl acetate; polysulfone; polyether sulfone; polyether imide; polyarylate; polyamideimide; polyvinyl chloride; vinyl chloride-ethylene copolymer; vinyl chloride-vinyl acetate copolymer; polyimides, polyamides; polyolefins such as polyethylene; ultra high molecular weight polyethylene; high density polyethylene; linear low density polyethylene; polyethylene napthalate; polyethylene terephthalate; polypropylene; chlorinated polyethylene; ethylene acrylic acid copolymers; polyamides, for example, nylon 6, nylon 6,6, and the like; phenylene oxide resins; phenylene sulfide resins; polyoxymethylenes; polyesters; polyvinyl chloride; vinylidene chloride/vinyl chloride resins; and vinyl aromatic resins such as polystyrene; poly(vinylnaphthalene); poly(vinyltoluene); polyimides; polyaryletheretherketone; polyphthalamide; polyetheretherketones; polyaryletherketone, and combinations of two or more thereof.

The choice of resin matrix material may depend on the particular requirements of the application for which the boron nitride/resin composite material is to be used. For example, properties such as impact resistance, tensile strength, operating temperature, heat distortion temperature, barrier characteristics, etc., are all affected by the choice of polymer matrix material.

In some embodiments, the resin matrix material can include one or more polyamide thermoplastic polymer matrices. A polyamide polymer is a polymer containing an amide bond (--NHCO--) in the main chain and capable of being heat-melted at temperatures less than 300 degrees Celsius. Specific examples of suitable polyamide resins include, but are not limited to, polycaproamide (nylon 6), polytetramethylene adipamide (nylon 46), polyhexamethylene adipamide (nylon 66), polyhexamethylene sebacamide (nylon 610), polyhexamethylene dodecamide (nylon 612), polyundecamethylene adipamide (nylon 116), polyundecanamide (nylon 11), polydodecanamide (nylon 12), polytrimethylhexamethylene terephthalamide (nylon TMHT), polyhexamethylene isophthalamide (nylon 61), polyhexamethylene terephthal/isophthalamide (nylon 6T/61), polynonamethylene terephthalamide (nylon 9T), polybis(4-aminocyclohexyl)methane dodecamide (nylon PACM12), polybis(3-methyl-4-aminocyclohexyl)methane dodecamide (nylon dimethyl PACM12), polymethaxylylene adipamide (nylon MXD6), polyundecamethylene terephthalamide (nylon 11T), polyundecamethylene hexahydroterephthalamide (nylon 11T(H)) and their copolymerized polyamides and mixed polyamides. Among these, nylon 6, nylon 46, nylon 66, nylon 11, nylon 12, nylon 9T, nylon MXD6, and their copolymerized polyamides and mixed polyamides are exemplary in terms of availability, handleability and the like.

Examples of suitable thermosetting polymers for use in the substrate are epoxies, acrylate resins, methacrylate resins, phenol-formaldehydes (novolac), epoxy-modified novolacs, furans, urea-aldehydes, melamine-aldehydes, polyester resins, alkyd resins, phenol formaldehyde resoles, phenol-aldehydes, polyacetals, polysiloxanes, polyurethanes, etc., or a combination of two or more thereof. In one embodiment, the thermoset polymer is an aldehyde condensation product based on phenol, melamine, or urea. Phenol-formaldehyde resins can be used either as (a) resoles having a phenol to formaldehyde molar ratio greater than 1, or (b) novolacs with a phenol to formaldehyde ratio of less than 1. Novolac resins generally require an additional formaldehyde source to cure the polymer.

Epoxy-modified novolacs are disclosed by U.S. Pat. No. 4,923,714 to Gibb et al.. The phenolic portion can comprise a phenolic novolac polymer; a phenolic resole polymer; a combination of a phenolic novolac polymer and a phenolic resole polymer; a cured combination of phenolic/furan or a furan resin to form a precured resin (as disclosed by U.S. Pat. No. 4,694,905 to Armbruster); or a curable furan/phenolic resin system curable in the presence of a strong acid to form a curable resin (as disclosed by U.S. Pat. No. 4,785,884 to Armbruster). The phenolics of the above-mentioned novolac or resole polymers can be phenol moieties such as, for example, phenol, cresol, xylenol, etc., or bis-phenol moieties such as, for example, bisphenol A, bisphenol F, etc.

The masterbatch compositions can comprise a functionalization agent such as, for example, a silane agent. In one embodiment, the compositions can comprise from 1 to 5 wt. % of a functionalization agent; from 1.5 to 4 wt.%; even from 2.7 to 3.7 wt. %. Here as elsewhere in the specification and claims, numerical values can be combined to form new and non-disclosed ranges.

The silane agent can be added at any point in processing of the composition. In one embodiment, the silane agent can be added in-situ at any point in the mixing process. In another embodiment, the silane is added to a additive or additive composition prior to introduction into the mixing or processing equipment.

In addition to silanes various other classes of functionalization agents can be added to improve the interface between the fillers and the resin matrix. Other examples of functionalization agents include organometallic compounds such as titanates & zirconates (e.g., Ken-react by Kenrich), aluminates, hyperdispersants (e.g., Solsperse by Lubrizol), maleated oligomers such as maleated polybutadiene resin or styrene maleic anhydride copolymer (e.g., those from Cray Valley). These functionalization agents may be used at 1 wt. % to 15 wt.%; or from 3 wt. % to 12 wt. %; even from 5 wt. % to 10 wt. %. Here as elsewhere in the specification and claims, numerical values can be combined to form new and non-disclosed ranges.

The masterbatch composition comprises a boron nitride/polymer composite and can comprise the polymer resin material in an amount of from 40 wt. % to 99 wt. %; from 45 wt. % to 95 wt. %; from 50 wt. % to 90 wt. %; from 60 wt. % to 75 wt. %; even from 42 wt. % to 58 wt. %. The masterbatch composition can comprise the boron nitride component in an amount of from 1 wt. % to 60 wt. %; from 5 wt. % to 55 wt. %; from 10 wt. % to 50 wt. %; from 25 wt. % to 40 wt. %; even from 42 wt. % to 58 wt. %. Here as elsewhere in the specification and claims, numerical values can be combined to form new and non-disclosed ranges.

The boron nitride can be incorporated into the resin material in any suitable manner. Generally, the masterbatch compositions can be formed by mixing the boron nitride into the resin material. Mixing is desirably carried out to sufficiently disperse the boron nitride in the resin matrix. Mixing can be carried out under conditions such that the shear forces are sufficient to disperse the boron nitride into the molten resin. Mixing can be accomplished by any type of mixing equipment or device suitable for mixing resin materials. Examples of suitable mixing equipment includes, but are not limited to, Brabender mixers, Banbury mixers, a roll, a kneader, a single screw extruder, a twin screw extruder, a planetary roller extruder, etc.

As described above, the masterbatch composition can comprise a functionalization agent. Without being bound to any particular theory, the functionalization agent (e.g., a silane) can be provided to improve the wetting of the boron nitride to facilitate intermixing of the boron nitride in the resin material. In one embodiment, the functionalization agent can be added to the resin material prior to or with the addition of the boron nitride material. In another embodiment, the boron nitride material can be treated with the functionalization agent prior to addition of the boron nitride to the resin material.

In one embodiment, a functionalization agent, such as a silane or other functionalization including those described herein, can be added to the resin material.

In another embodiment, boron nitride can be added to the reaction step to form the resin material. In one embodiment, for example, boron nitride can be added to the reaction of phenol and formaldehyde to form a novolac resin with boron nitride as a component thereof. Without being bound to any particular theory, the boron nitride could enhance the reaction of the components by acting as a nucleating site for the reactions.

The masterbatch composition is formed into a suitable form (e.g., a sheet) by molding, casting, etc. The resulting masterbatch composite form is then granulated to provide a masterbatch powder material that is a composite powder of boron nitride and the resin material. The masterbatch form can be granulated or ground into powder particles by any suitable method including, but not limited to, hammer milling, jet milling, ball milling, vertical roller milling, vibration milling, classifier mills, sieving mills, cutting mills, etc. The masterbatch powder material can have a particle size such that 75% to 100% of the particles pass 200 mesh; in another embodiment 95% to 100% of the particles pass 200 mesh. Mesh as used herein refers to U.S. Standard Sieve Series. Here as elsewhere in the specification in claims numerical value can be combined to form new and non-disclosed ranges.

The powders can be formed by any suitable technique including, but not limited to, grinding, milling, etc. using any suitable technique. In one embodiment, the grinding operation can be carried out using a suitable processing agent to prevent agglomeration of the particles during grinding. In still another embodiment, the particles can be produced by grinding or milling in the presence of another suitable material to affect the resin material in a desired manner. For example, it may be desirable to mix the composite with an appropriate curing agent to cure the resin material of the composite. In one embodiment where the composite comprises a novolac resin, the particles can be formed by grinding in the presence of a suitable curing agent, such as hexamine, hexamethylenetetramine, etc., to cure the resin. In one embodiment, the masterbatch can be ground in the presence of 0 to 20% of a curing agent; 2% to 15% of a curing agent; even 6% to 12% of curing agent.

The present masterbatch composition and masterbatch particles can be used in a variety of applications. The masterbatch composite particles can be used as an additive in a variety of compositions and can impart such compositions with desirable properties such as lubricating properties and good thermal conductivity. The masterbatch composite powders can be incorporated into a composition that can be used as a base material for forming a molded article or can be provided as part of a coating composition. The masterbatch particles are suitable as a lubricant agent and can be employed in compositions or articles where lubricity is desired. The masterbatch compositions and particles can provide a composition or article with good thermal conductivity.

The masterbatch composite particles can be present in a subsequent composition in the powder or particle form or can be re-melted and blended into a composition of interest. The masterbatch composite material can be used to form an article directly from re-melting the composite powder and molding into a desired shape.

The compositions comprising the masterbatch composite powders can comprise the powders in an amount as selected to provide a desired amount of boron nitride and resin material.

There are also described friction compositions comprising boron nitride. The friction composition comprises a base material and boron nitride. The boron nitride material can be added as part of a dry blend or from a masterbatch composition. The friction composition may be a brake pad formulation. The brake pad formulation may be a non-asbestos organic (NAO) formulation.The brake pad formulation may be a low metallic (i.e., low steel) formulation. The brake pad formulation my be a semi-metallic formulation. The formulations are not particularly limited and can be selected as desired for a particular purpose or intended use. The friction composition may comprise from 0.1 weight percent to 10 weight percent of boron nitride; from 1 weight percent to 8 weight percent; from 2.5 weight percent to 7.5 weight percent; even from 3 weight percent to 6 weight percent. Here as elsewhere in the specification and claims numerical values can be combined to form new and non-disclosed ranges. The friction composition may comprise from 0.1 weight percent to 7.5 weight percent of copper. The brake pad composition comprising boron nitride may comprise 0.5 weight percent or less of copper. As used herein, a composition having 0.5 weight percent or less of copper is considered to be substantially free of copper.

Friction composition comprising boron nitride can provide improved properties over compositions comprising copper without any boron nitride. The addition of boron nitride can provide comparable or improved properties compared to compositions having no boron nitride and larger concentrations of copper.

The friction compositions formed using the masterbatch composite powders as a component thereof are used as a coating or as part of a composition in a brake pad. The inventors have found that a brake pad comprising a friction formulation formed with a masterbatch boron nitride/resin composite powder as a component thereof can exhibit superior properties with respect to compressibility, hot compress, wear resistance, and noise index as compared to a formulation formed from separately dry blending the boron nitride material and the resin material in forming the friction formulation. Further, these improved properties can be obtained while reducing the concentration of copper used in the friction formulation. This can be achieved even at low loadings of boron nitride.

These and other aspects of the invention can be further illustrated and understood with reference to the following examples.

### EXAMPLES

### Masterbatch Composition

A boron nitride/novolac masterbatch material is made by premixing boron nitride and novalac resin powder in a dry blender, feeding the premix into a extruder, , and cooling the compounded material. Masterbatch particles are then formed by grinding or milling the compounded material in the presence of hexamine curing agent. In addition to boron nitride, novolac and curing agent, other additives (e.g., functionalization agents, resin modifiers, abrasives, lubricants, fibers) can also be incorporated into the masterbatch, in any of the process steps (e.g,, premixing, compounding, grinding).

### Brake Pad Compositions

### Comparative Examples 1-2

Comparative brake pad compositions are prepared as follows: The compositions are prepared by dry blending the separate boron nitride and novolac materials into a brake pad formulation.

### Examples 1-2

Examples 1-2 are prepared in a similar manner except that the boron nitride and resin material are added via the masterbatch composition. In Example 1, the brake pad composition includes copper. In Example 2, the brake pad composition does not include any copper.

Various properties of the brake pad compositions are evaluated as follows:

Overall friction level is represented by nominal µ, and fade is represented by µ14 (the pads are not scotched).

Pad wear is measured as pad thickness loss, which refers to the thickness change in pad, due to material removal from the pad upon wear. Disc wear is measured as disc thickness loss, which refers to the thickness change in disc upon wear. Wear is measured during the SAE J2522 procedure.

Noise index is measured by the procedure of SAE J2521.

Table 1 provides the results of the testing on the brake pad formulations of Examples 1-2 and Comparative Examples 1-2.

**Table 1**

| **Examples** | **BN wt%** | **Cu wt%** | **SAE J2522** | | | | **SAE 2521** |
|---|---|---|---|---|---|---|---|
| | | | **µ nominal** | **µ14 fade** | **average pad thickness loss (mm)** | **average disc thickness loss (mm)** | **noise index** |
| Comp. 1 | 2.5 | 7.5 | 0.29 | 0.23 | 1.22 | 0.03 | 4.6 |
| Comp. 2 | 0 | 15 | 0.33 | 0.31 | 0.47 | 0.03 | 4.4 |
| Example 1 | 2.5 | 7.5 | 0.33 | 0.32 | 0.47 | 0.01 | 5.0 |
| Example 2 | 1.5 | 0 | 0.30 | 0.30 | 0.61 | 0.02 | 6.5 |
| Example 3 | 5 | 0 | 0.25 | 0.25 | 1.63 | 0.02 | 7.7 |
| Example 4 | 5 | 0 | 0.26 | 0.25 | 1.76 | 0.02 | 7.1 |

The brake pad examples employing the boron nitride/polymer masterbatch powders exhibit improved properties over brake pad compositions formulated by dry blending the boron nitride and the polymer resin as separate components. For example, Example 1 prepared using the boron nitride/polymer masterbatch powders exhibit significantly improved pad wear and fade performance compared to Comparative Example 1 that has a similar loading of boron nitride and copper in the final formulation. The improved fade performance is exhibited by a 35% increase of µ14 from 0.23 to 0.31, and the improved wear performance is exhibited by an average 61% reduction in pad thickness loss.

Examples 2-4 demonstrate that, boron nitride can provide benefits to brake pad performance compared with formulations that include copper. Example 2 demonstrates a formulation employing the boron nitride/polymer masterbatch approach as compared with formulation that includes copper (Comparative Example 2). The improvement in disc wear performance is exhibited by an average 33% reduction in disc thickness loss, and the improvement in noise performance is exhibited by a 2 point increase of noise index from 4.4 to 6.5. Examples 3 and 4 employ boron nitride added via a dry blend (as opposed to a masterbatch) and have a noise index that is over 2 or 3 points than that of Comparative Example 2.

## Claims

1. A brake pad article comprising a composition formed from a base material and a masterbatch composition, the master batch comprising a composite of (a) a boron nitride material, and (b) a polymer resin material.

2. The brake pad article of claim 1, wherein the masterbatch composition comprises from 5 weight percent to 60 weight percent of boron nitride and from 40 weight percent to 95 weight percent of the polymer resin, preferably comprising from 20 weight percent to 50 weight percent of boron nitride and from 50 weight percent to 80 weight percent of the polymer resin, more preferably comprising from 25 weight percent to 40 weight percent of boron nitride and from 60 weight percent to 75 weight percent of the polymer resin.

3. The brake pad article of claim 1 or 2, wherein the boron nitride is chosen from platelet boron nitride, hexagonal boron nitride, boron nitride nanotubes, boron nitride fibers, agglomerates of hexagonal boron nitride, or a combination of two or more thereof.

4. The brake pad article of any of claims 1-3, wherein the boron nitride comprises boron nitride particles or agglomerates having an average particle size of from 1 to 500 microns.

5. The brake pad article of any of claims 1-4, wherein the polymer resin material is chosen from a thermoset material or a thermoplastic material.

6. The brake pad article of any of claims 1-5, wherein the polymer resin material comprises a phenol formaldehyde resin.

7. The brake pad article of any of claims 1-6, wherein the polymer resin material is a novolac resin.

8. The brake pad article of any of claims 1-7 comprising a functionalization agent, wherein the functionalization agent is preferably chosen from a silane, a titanate, a zirconate, an aluminate, a hyperdispersant, a maleated oligomer, a fatty acid or wax and their derivatives, an ionic surfactant, a non-ionic surfactant, or a combination of two or more thereof.

9. The brake pad article of any of claims 1-8, wherein the base material is a non-asbestos organic formulation, a low metallic resin bonded formulation, or a semi-metallic resin bonded formulation.

10. The brake pad article of any of claims 1-9, wherein the composition is disposed on a surface of the brake pad article.

11. The brake pad article of any of claims 1-9, wherein the brake pad article is formed from the composition.

12. The brake pad article of claim 10 or 11 comprising from 0.1 weight percent to 10 weight percent of boron nitride, preferably comprising from 1 weight percent to 8 weight percent of boron nitride, more preferably comprising from 2.5 weight percent to 7.5 weight percent of boron nitride.

13. The brake pad article of any of claims 1-12 comprising from 0.1 weight percent to 7.5 weight percent of copper.

14. The brake pad article of any of claims 1-12, wherein the article is free of copper.

15. The brake pad article of claim 1-13 or 14 having a µ14 value after SAE J2522 test that is up to 35% greater than that of an article comprising a same concentration of boron nitride and/or copper formed from a dry blend, preferably having a µ14 value after SAE J2522 test that is 10 % to 35% greater than that of an article comprising a same concentration of boron nitride and/or copper formed from a dry blend.

16. The brake pad article of claim 1-13 or 14 having pad thickness loss after SAE J2522 test that is up to 65% lower than that of an article comprising a same concentration of boron nitride and/or copper provided from a dry blend, preferably having pad thickness loss after SAE J2522 test that is 10% to 65% lower than that of an article comprising a same concentration of boron nitride and/or copper provided from a dry blend.

## Patentansprüche

1. Bremsklotzgegenstand, umfassend eine Zusammensetzung, gebildet aus einem Basismaterial und einer Masterbatch-Zusammensetzung, wobei der Masterbatch ein Komposit von (a) einem Bornitridmaterial und (b) einem Polymerharzmaterial umfaßt.

2. Bremsklotzgegenstand gemäß Anspruch 1, wobei die Masterbatch-Zusammensetzung von 5 Gew.-% bis 60 Gew.-% Bornitrid und von 40 Gew.-% bis 95 Gew.-% des Polymerharzes umfaßt, vorzugsweise von 20 Gew.-% bis 50 Gew.-% Bornitrid und von 50 Gew.-% bis 80 Gew.-% des Polymerharzes umfaßt, mehr bevorzugt von 25 Gew.-% bis 40 Gew.-% Bornitrid und von 60 Gew.-% bis 75 Gew.-% des Polymerharzes umfaßt.

3. Bremsklotzgegenstand gemäß Anspruch 1 oder 2, wobei das Bornitrid aus Plättchen-Bornitrid, hexagonalem Bornitrid, Bornitrid-Nanoröhren, Bornitridfasern, Agglomeraten von hexagonalem Bornitrid oder einer Kombination von zwei oder mehreren davon, ausgewählt ist.

4. Bremsklotzgegenstand gemäß einem der Ansprüche 1-3, wobei das Bornitrid Bornitridteilchen oder Agglomerate mit einer durchschnittlichen Teilchengröße von 1 bis 500 Mikrometer umfaßt.

5. Bremsklotzgegenstand gemäß einem der Ansprüche 1-4, wobei das Polymerharzmaterial aus einem wärmehärtenden Material oder einem thermoplastischen Material ausgewählt ist.

6. Bremsklotzgegenstand gemäß einem der Ansprüche 1-5, wobei das Polymerharzmaterial ein Phenolformaldehydharz umfaßt.

7. Bremsklotzgegenstand gemäß einem der Ansprüche 1-6, wobei das Polymerharzmaterial ein Novolak-Harz ist.

8. Bremsklotzgegenstand gemäß einem der Ansprüche 1-7, umfassend ein Funktionalisierungsmittel, wobei das Funktionalisierungsmittel vorzugsweise aus einem Silan, einem Titanat, einem Zirkonat, einem Aluminat, einem Hyperdispergiermittel, einem maleiertem Oligomer, einer Fettsäure oder Wachs und deren Derivaten, einem ionischen grenzflächenaktiven Mittel, einem nicht-ionischen grenzflächenaktiven Mittel oder einer Kombination von zwei oder mehreren davon ausgewählt ist.

9. Bremsklotzgegenstand gemäß einem der Ansprüche 1-8, wobei das Basismaterial eine organische Nicht-Asbest-Formulierung, eine niedermetallische harzgebundene Formulierung oder eine halbmetallische harzgebundene Formulierung ist.

10. Bremsklotzgegenstand gemäß einem der Ansprüche 1-9, wobei die Zusammensetzung auf einer Oberfläche des Bremsklotzgegenstands abgeschieden ist.

11. Bremsklotzgegenstand gemäß einem der Ansprüche 1-9, wobei der Bremsklotzgegenstand aus der Zusammensetzung gebildet ist.

12. Bremsklotzgegenstand gemäß Anspruch 10 oder 11, umfassend von 0,1 Gew.-% bis 10 Gew.-% Bornitrid, vorzugsweise umfassend von 1 Gew.-% bis 8 Gew.-% Bornitrid, mehr bevorzugt umfassend von 2,5 Gew.-% bis 7,5 Gew.-% Bornitrid.

13. Bremsklotzgegenstand gemäß einem der Ansprüche 1-12, umfassend von 0,1 Gew.-% bis 7,5 Gew.-% Kupfer.

14. Bremsklotzgegenstand gemäß einem der Ansprüche 1-12, wobei der Gegenstand frei von Kupfer ist.

15. Bremsklotzgegenstand gemäß Anspruch 1-13 oder 14 mit einem µ14 Wert nach SAE J2522 Test, welcher bis zu 35% höher ist als derjenige eines Gegenstands, umfassend eine gleiche Konzentration an Bornitrid und/oder Kupfer, gebildet aus einem Trockenblend, vorzugsweise mit einem µ14 Wert nach SAE J2522 Test, welcher 10% bis 35% höher als derjenige eines Gegenstands ist, umfassend eine gleiche Konzentration an Bornitrid und/oder Kupfer, gebildet aus einem Trockenblend.

16. Bremsklotzgegenstand gemäß Anspruch 1-13 oder 14 mit einem Klotzdickenverlust nach SAE J2522 Test, welcher bis zu 65% niedriger als derjenige eines Gegenstands ist, umfassend eine gleiche Konzentration an Bornitrid und/oder Kupfer, bereitgestellt aus einem Trockenblend, vorzugsweise mit einem Klotzdickenverlust nach SAE J2522 Test, welcher 10% bis 65% niedriger als derjenige eines Gegenstands ist, umfassend eine gleiche Konzentration an Bornitrid und/oder Kupfer, bereitgestellt aus einem Trockenblend.

## Revendications

1. Plaquette de frein comprenant une composition formée à partir d'un matériau de base et d'un mélange maitre, le mélange maitre comprenant un composite de (a) un nitrure de bore et (b) une résine polymère.

2. Plaquette de frein selon la revendication 1, où le mélange maitre comprend de 5% en poids à 60% en poids de nitrure de bore et de 40% en poids à 95% en poids de résine polymère, de préférence de 20% en poids à 50% en poids de nitrure de bore et de 50% en poids à 80% en poids de résine polymère, de manière plus préférée de 25% en poids à 40% en poids de nitrure de bore et de 60% en poids à 75% en poids de résine polymère.

3. Plaquette de frein selon la revendication 1 ou 2, où le nitrure de bore est choisi parmi le nitrure de bore en plaquette, le nitrure de bore hexagonal, des nanotubes de nitrure de bore, des fibres de nitrure de bore, des agglomérats de nitrure de bore hexagonal, ou une combinaison de deux ou plusieurs de ceux-ci.

4. Plaquette de frein selon l'une quelconque des revendications 1 à 3, où le nitrure de bore comprend des particules ou agglomérats de nitrure de bore ayant une taille moyenne des particules située dans l'intervalle allant de 1 à 500 µm.

5. Plaquette de frein selon l'une quelconque des revendications 1 à 4, où la résine polymère est choisie parmi un matériau thermodurcissable et un matériau thermoplastique.

6. Plaquette de frein selon l'une quelconque des revendications 1 à 5, où la résine polymère comprend une résine phénol-formaldéhyde.

7. Plaquette de frein selon l'une quelconque des revendications 1 à 6, où la résine polymère est une résine Novolaque.

8. Plaquette de frein selon l'une quelconque des revendications 1 à 7, comprenant un agent de fonctionnalisation, où l'agent de fonctionnalisation est choisi de préférence, parmi un silane, un titanate, un zirconate, un aluminate, un hyperdispersant, un oligomère maléaté, un acide gras ou une cire et leur dérivés, un tensioactif ionique, un tensioactif non ionique, ou une combinaison de deux ou plusieurs de ceux-ci.

9. Plaquette de frein selon l'une quelconque des revendications 1 à 8, où le matériau de base est une formulation organique sans amiante, une formulation liée par une résine à faible teneur en métal, ou une formulation liée par une résine semi-métallique.

10. Plaquette de frein selon l'une quelconque des revendications 1 à 9, où la composition est disposée à la surface de la plaquette de frein.

11. Plaquette de frein selon l'une quelconque des revendications 1 à 9, où la plaquette de frein est composée de la composition.

12. Plaquette de frein selon la revendication 10 ou 11, comprenant de 0,1% en poids à 10% en poids de nitrure de bore, de préférence de 1% en poids à 8% en poids de nitrure de bore, de manière plus préférée de 2,5% en poids à 7,5% en poids de nitrure de bore.

13. Plaquette de frein selon l'une quelconque des revendications 1 à 12, comprenant de 0,1% en poids à 7,5% en poids de cuivre.

14. Plaquette de frein selon l'une quelconque des revendications 1 à 12, où l'article est exempt de cuivre.

15. Plaquette de frein selon l'une quelconque des revendications 1 à 13 ou 14, ayant une valeur µ14 par le test SAE J2522 supérieure de jusqu'à 35% à la valeur d'un article comprenant la même concentration de nitrure de bore et/ou de cuivre formé à partir d'un mélange sec, de préférence ayant une valeur µ14 par le test SAE J2522 supérieure de 10% à 35% à la valeur d'un article comprenant la même concentration de nitrure de bore et/ou de cuivre formé à partir d'un mélange sec.

16. Plaquette de frein selon l'une quelconque des revendications 1 à 13 ou 14, ayant une perte d'épaisseur de plaquette par le test SAE J2522 inférieure de jusqu'à 65% à la valeur d'un article comprenant la même concentration de nitrure de bore et/ou de cuivre formé à partir d'un mélange sec, de préférence ayant une perte d'épaisseur de plaquette par le test SAE J2522 inférieure de 10% à 65% à la valeur d'un article comprenant la même concentration de nitrure de bore et/ou de cuivre formé à partir d'un mélange sec.
